# EUROPEAN PATENT SPECIFICATION

(11) **EP 1 616 726 B1**
(45) Date of publication and mention of the grant of the patent: **22.08.2007**
(21) Application number: 05381029.7
(22) Date of filing: 14.06.2005
(51) Int. Cl.: B60C 27/18

(54) **Textile anti-skid cover for vehicle tyres**
Textiler Gleitschutzüberzug für Fahrzeugreifen
Revêtement antidérapant en forme d' un textile pour pneumatiques de voitures

(30) Priority: 14.07.2004 ES 200401719
(43) Date of publication of application: 18.01.2006
(73) Proprietor: Lopez Roca, Sergio, 08221 Terrassa (ES); Valls Chaparro, Isaac, 08221 Terrassa (ES)
(72) Inventor: Lopez Roca, Sergio, 08221 Terrassa (ES); Valls Chaparro, Isaac, 08221 Terrassa (ES)
(74) Representative: Maldonado Jordan, Julia

(56) References cited:
- WO-A-00/59745
- DE-U1- 20 115 651
- US-A- 2 392 577
- US-A- 2 682 907

## Description

### OBJECT OF THE INVENTION

The present invention relates to a slip-proof cover for vehicle tyres in adverse weather conditions, preferably ice or snow.

The cover is characterised by a configuration that makes it easy to mount, providing a high reliability and positional stability and good mechanical properties regarding the abrasion implied by its use in its intended conditions.

The cover is also characterised by a structure and composition of the slit that optimise its slip-proof capacities and its resistance to abrasion.

### BACKGROUND OF THE INVENTION

Driving a vehicle provided with inflatable tyres on slippery surfaces such as snow or ice is dangerous, due to the sharp reduction of the coefficient of friction.

If the coefficient of friction is reduced by the presence of ice, the latter's stiffness requires the use of solutions based on metal protrusions or the like.

Tyres are known with studs meant to insert in the ice or snow to improve the grip.

This type of tyres are used when there are snow or ice conditions at all times, such as for vehicles used in ski resorts.

In situations where an improved grip is occasionally required, such as when having to cross a snow-covered mountain pass, other auxiliary means are common that are easier to mount and remove, such as snow chains.

Auxiliary elements of this type use diverse attachment solutions that seek a simple installation.

Chains are bulky and take up significant space in the vehicle's luggage compartment. The stiffness of the chain allows it to stick in the snow; however, it also means that considerable stresses are applied on the tyre surface, damaging it.

This damage is greater when there are areas without snow to cushion the impact of the chain on the ground. These areas are sometimes so short that it is not worth removing and installing the chains again.

Also known is the use of covers as alternative to chains. In this sense must be cited European Patent with publication number EP1165329, which describes and protects a device that can be fitted on vehicle tyres to increase the friction between the tyre and the road, according to the preamble of claim 1.

The configuration of this cover consists of a belt that surrounds the tyre with an oversize of 4%, its outer part being fully closed and its inner part having a strip with an elastic peripheral asymmetric tensor.

DE 20115651 discloses a traction aid cover for a type including at its sides elastic adjusting straps which are fitted on either side of the tyre.

The present invention consists of a design of a cover with a fabric specifically conceived to withstand shear stresses, improve the grip and improve positional stability.

### DESCRIPTION OF THE INVENTION

The present invention consists of a slip-proof cover for vehicle tyres that consists of a main band made of high-strength textile material and symmetrically-arranged lateral elastic adjusters that facilitate mounting and removing it.

The high-strength central band consists of a swath of cord fabric made of several strands.

The presence of several strands allows to increase the strength and thickness of each cord to provide a surface with a better grip on the slippery surface.

The main textile band includes cords of different thickness, providing the band with protrusions and irregularities that improve its adherence to the ground.

The fabric incorporates a textile ligament, preferably made of taffeta, which completes the composition of the fabric.

The main band is a swath cut along an angle from 45° to 90° so that fibres that were originally longitudinal and transverse will be at a 45° angle. Note that angles under 45° result in equivalent configurations, as the longitudinal fibres become transverse fibres.

The specific case in which the angle is 45° with variations of up to 10° in the orientation of the fibres is of particular interest. This inclination has been compared to the natural orientation of 90° and has been shown to improve the two variables of greatest interest: friction on slippery surfaces such as snow or ice and resistance to wear.

The reason for this is that the unravelling is minimised, as the forces act identically on all fibres. It must be pointed out that if the longitudinal or transverse fibres suffer greater loads or abrasion than the others the entire fabric is deteriorated. The ideal solution is to balance the external demands on the fibre between the fibres having one orientation and the other, to provide an optimum overall performance.

Possible cutting means are laser, scissors or heat soldering. In cases in which cutting produces localised fusion, cut ends show a lower tendency to unravelling before they are sewn.

The cover of the invention can be treated to control the proliferation of mites and bacteria. For this purpose, the cord that forms part of the cover is treated with an anti-mite and antibacterial product. The cover can be stored unused for a long time without developing bad odours and without becoming a source of proliferation of micro-organisms.

### DESCRIPTION OF THE DRAWINGS

The present descriptive memory is completed with a set of drawings that illustrate the preferred embodiment of the invention without limiting it in any way.

Figure 1 is a schematic representation of the fabric constituted by longitudinal and transverse fibres, as well as of the orientation of the cut.

Figure 2 is a perspective view of the cover without being folded and its position on the tyre. The tyre is not shown.

Figure 3 shows a representation of an embodiment of the seams in the cover.

### PREFERRED EMBODIMENT OF THE INVENTION

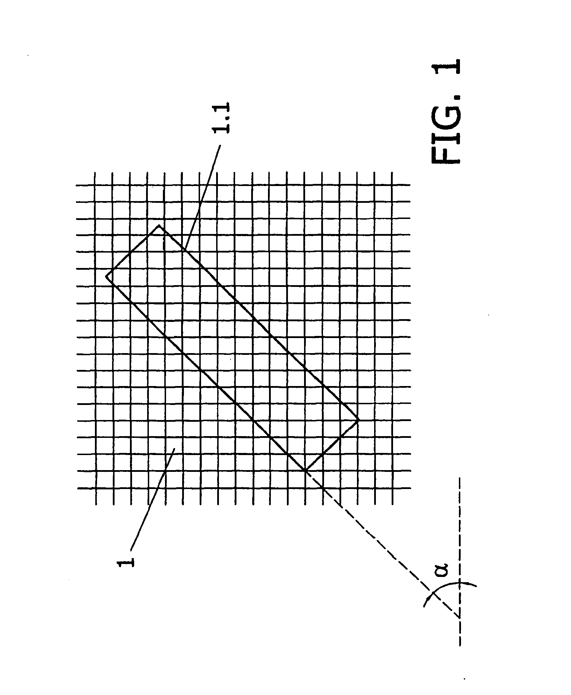

Figure 1 shows a representation of the fabric (1) with its fibres arranged longitudinally and transversally.

On this fabric (1) a band (1.1) is cut along a 45° angle (α), which is considered most advantageous within the admissible range from 45° to 90°, such that with respect to this band the longitudinal and transverse fibres will now be diagonal.

The fabric is made of a material with a high tenacity spun from several strands (this example uses from 5 to 9 strands) to provide a sufficiently coarse texture to improve adherence and increase its resistance.

The fabric (1) has been manufactured with a surface density from 0.3 to 1 Kg/m2 using taffeta ligament.

On this fabric (1) a rectangular oblique cut (α) is made at 45° with a length equal to the perimeter of the cover plus the width of the seam strips and a width greater that that of the tyre.

Elastic adjusting straps (2) are incorporated on the sides of the cover that are fitted on either side of the tyre to stabilise the installation.

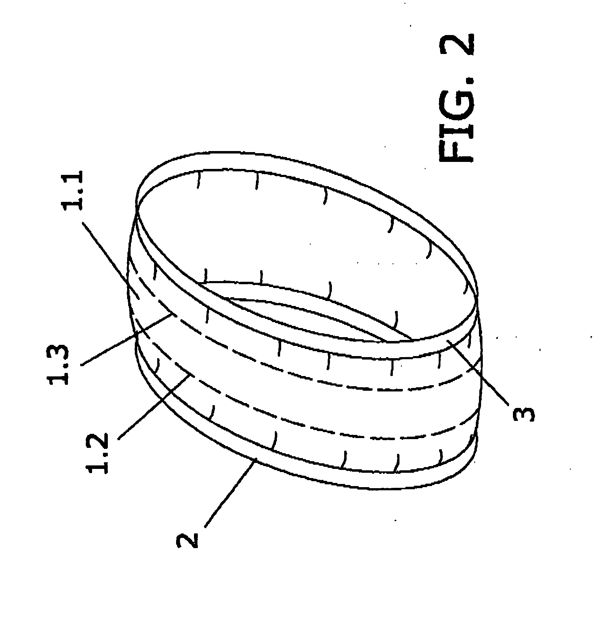

Figure 2 shows dashed and dotted lines (1.2, 1.3) representing the positional references for the tyre edges.

The fabric used for the cover is preferably polypropylene due to its high tenacity, its water-repelling properties and recyclability.

Polypropylene has a low density, less than that of water, so that the cover made with this material has a lower weight than covers with the same volume made with higher density materials.

In a second example of embodiment the material of the cover is para-aramid fibre, which is very strong, fireproof and corrosion proof.

In a preferred example of embodiment, the cover can be made of a closed annular piece with a seam (3) that joins the minor ends of the band (1.1).

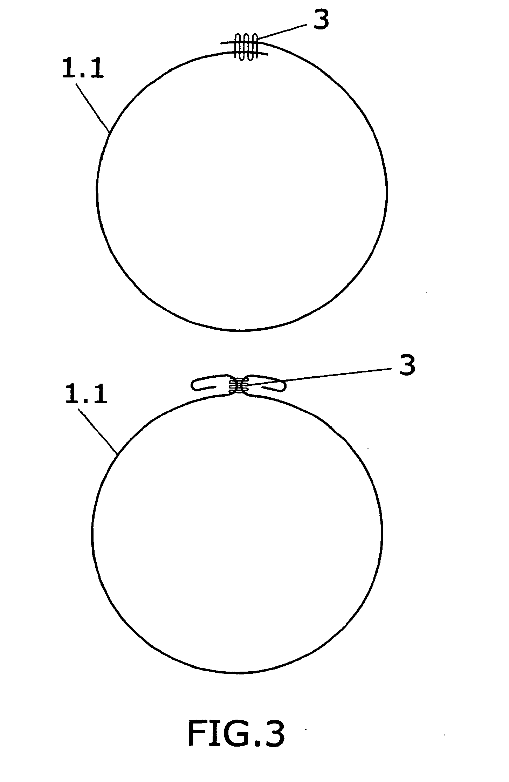

This type of seams (3) are normally made by overlapping one end on the other, as shown in the top of figure 3, and constitute the principal breaking point of the cover.

In the cover of the invention the seam (3) is made by folding the ends outward and sewing at the points of contact of said ends.

The bottom part of figure 3 shows the position of the ends of the band (1.1), folded outward at the time of constituting the seam so that this union line is reinforced.

The piece can be constituted as an open rectangular piece with closure means at its ends.

These closure means are preferably Velcro strips.

The essence of this invention is not affected by variations of the materials, shape, size and arrangement of the component elements, described in a non-limiting manner that should allow its reproduction by an expert in the field.

## Claims

1. Slip-proof cover for vehicle tyres, of the type constituted by a textile fabric (1) made of high-tenacity cords spun with several strands and with a textile ligament, producing a fabric with a surface density of 0.3 to 1 Kg/m2, this fabric being used to constitute a main band (1.1) with an orientation angle (α) of the longitudinal or transversal fabric fibres from 45° to 90° with respect one longitudinal edge of said main band (1.1), and a width greater than the width of the tyre, **characterised in that** it is provided at its sides with corresponding elastic adjusting straps (2, 3) that are fitted on either side of the tyre, and **in that** the cord that forms the fabric (1) has different thickness, so that the main band (1.1) has irregularities.

2. Slip-proof cover for vehicle tyres according to claim 1 **characterised in that** said orientation angle (*α*) of the fibres is 45° plus/minus 10°.

3. Slip-proof cover for vehicle tyres according to claim 1 **characterised in that** the textile ligament is taffeta.

4. Slip-proof cover for vehicle tyres according to claim 1 **characterised in that** the cord formed by the fabric (1) comprises 5 to 9 strands.

5. Slip-proof cover for vehicle tyres according to claim 1 **characterised in that** the fabric is polypropylene.

6. Slip-proof cover for vehicle tyres according to claim 1 **characterised in tha**t the fabric is para-aramid.

7. Slip-proof cover for vehicle tyres according to claim 1 **characterised in that** the cord that forms the textile fabric (1) has an anti-mite treatment.

8. Slip-proof cover for vehicle tyres according to claim 1 **characterised in that** the cord that forms the textile fabric (1) has an anti-bacterial treatment.

9. Slip-proof cover according to claim 1 **characterised in that** it is constituted as an annular piece with a seam on the outer fold of the ends.

10. Slip-proof cover according to claim 1 **characterised in that** it is constituted as a rectangular piece with closure means at its ends.

11. Slip-proof cover according to claim 10 **characterised in that** the closure means are Velcro strips.

## Patentansprüche

1. Antirutschüberzug für Fahrzeugreifen der Art, der aus einem mittels hochzäher aus mehreren Fäden gebildeter Stränge und mit einer Textilbindung hergestellten Textilgewebe (1) besteht, wobei ein Gewebe mit einer Oberflächendichte von 0,3 bis 1 kg/m2 hergestellt wird und dieses Gewebe zur Bildung des Hauptstreifens (1.1) verwendet wird, wobei die längs bzw. quer verlaufenden Gewebefasern in einem 45° bis 90° Winkel (∝) gegenüber dem Längsrand dieses Hauptstreifens (1.1) verlaufen und wobei die Breite größer ist als die Breite des Reifens, **dadurch gekennzeichnet, dass** er an beiden Seiten mit jeweils einem elastischen Spannband (2, 3) versehen ist, das an beiden Seiten des Reifens befestigt wird, und dass der Schussfaden des Gewebes (1) unterschiedliche Stärken aufweist, so dass der Hauptstreifen (1.1) unregemäßig ist.

2. Antirutschüberzug für Fahrzeugreifen nach Anspruch 1, **dadurch gekennzeichnet, dass** dieser Richtungswinkel (∝) der Fasern 45° +/- 10° beträgt.

3. Antirutschüberzug für Fahrzeugreifen nach Anspruch 1, **dadurch gekennzeichnet, dass** die Textilbindung aus Taffet besteht.

4. Antirutschüberzug für Fahrzeugreifen nach Anspruch 1, **dadurch gekennzeichnet, dass** der vom Gewebe (1) gebildete Strang von 5 bis 9 Fäden gebildet wird.

5. Antirutschüberzug für Fahrzeugreifen nach Anspruch 1, **dadurch gekennzeichnet, dass** das Gewebe aus Polypropylen besteht.

6. Antirutschüberzug für Fahrzeugreifen nach Anspruch 1, **dadurch gekennzeichnet, dass** das Gewebe aus Para-Aramid besteht.

7. Antirutschüberzug für Fahrzeugreifen nach Anspruch 1, **dadurch gekennzeichnet, dass** der das Textilgewebe (1) bildende Strang gegen Milben behandelt wurde.

8. Antirutschüberzug für Fahrzeugreifen nach Anspruch 1, **dadurch gekennzeichnet, dass** der das Textilgewebe (1) bildende Strang antibakteriell behandelt wurde.

9. Antirutschüberzug nach Anspruch 1, **dadurch gekennzeichnet, dass** dieser als ringförmiges Teil mit einer Naht in der von den Enden gebildeten äußeren Falte ausgebildet ist.

10. Antirutschüberzug nach Anspruch 1, **dadurch gekennzeichnet, dass** dieser als rechteckiges Teil mit Verschlussmitteln an seinen Enden ausgebildet ist.

11. Antirutschüberzug nach Anspruch 10, **dadurch gekennzeichnet, dass** die Verschlussmittel Klettbänder sind.

## Revendications

1. Enveloppe antidérapante pour pneus automobiles, du type constitué d'un tissu textile (1) fait de cordons à haute ténacité fabriqués à partir de plusieurs fils et avec une armure textile, donnant un tissu d'une densité superficielle de 0,3 à 1 kg/m² utilisé pour constituer une bande principale (1.1) avec un angle d'orientation (∝) des fibres longitudinales ou transversales de 45° à 90° par rapport au bord longitudinal de ladite bande principale (1.1) dont la largeur est plus grande que la largeur du pneu, **caractérisée en ce que** chacun de ses flancs est doté de brides élastiques d'ajustage (2, 3) montées de chaque côté du pneu, et **en ce que** le cordon constituant le tissu (1) est d'une grosseur variable, ce qui fait que la bande principale (1.1) a des irrégularités.

2. Enveloppe antidérapante pour pneus automobiles, suivant la revendication 1, **caractérisée en ce que** ledit angle d'orientation (∝) des fibres est de 45° +/- 10°.

3. Enveloppe antidérapante pour pneus automobiles, suivant la revendication 1, **caractérisée en ce que** l'armure textile est en toile.

4. Enveloppe antidérapante pour pneus automobiles, suivant la revendication 1, **caractérisée en ce que** le cordon formé par le tissu (1) comprend 5 à 9 fils.

5. Enveloppe antidérapante pour pneus automobiles, suivant la revendication 1, **caractérisée en ce que** le tissu est en polypropylène.

6. Enveloppe antidérapante pour pneus automobiles, suivant la revendication 1, **caractérisée en ce que** le tissu est en para-aramide.

7. Enveloppe antidérapante pour pneus automobiles, suivant la revendication 1, **caractérisée en ce que** le cordon formant le tissu textile (1) a subi un traitement antiacarien.

8. Enveloppe antidérapante pour pneus automobiles, suivant la revendication 1, **caractérisée en ce que** le cordon constituant le tissu textile (1) a subi un traitement antibactérien.

9. Enveloppe antidérapante, suivant la revendication 1, **caractérisée en ce qu'**elle est constituée comme une pièce annulaire munie d'une couture sur le pli extérieur des extrémités.

10. Enveloppe antidérapante, suivant la revendication 1, **caractérisée en ce qu'**elle est constituée comme une pièce rectangulaire munie de moyens de fermeture sur les extrémités.

11. Enveloppe antidérapante, suivant la revendication 10, **caractérisée en ce que** les moyens de fermeture sont des bandes velcro.
